# FASCICULE DE BREVET EUROPEEN

(11) **EP 0 968 078 B1**
(45) Date de publication et mention de la délivrance du brevet: **31.07.2002**
(21) Numéro de dépôt: 98917190.5
(22) Date de dépôt: 20.03.1998
(51) Int. Cl.: B29C 45/14

(54) **PROCEDE D'INCLUSION D'ETIQUETTE ELECTRONIQUE DANS LA PAROI D'UN OBJET THERMOTRANSFORME ET DISPOSITIF PREPARATOIRE POUR CE PROCEDE**
VERFAHREN ZUM EINSCHLUSS EINES ELEKTRONISCHEN ETIKETS IN DIE WAND EINES WÄRMEVERFORMTEN GEGENSTANDS UND VORBEREITUNGSGERÄT FÜR DIESES VERFAHREN
METHOD FOR INCLUDING AN ELECTRONIC LABEL IN THE WALL OF A HEAT-TRANSFORMED OBJECT AND PREPARATORY DEVICE FOR THIS METHOD

(30) Priorité: 21.03.1997 FR 9703456
(43) Date de publication de la demande: 05.01.2000
(73) Titulaire: TLog, 75001 Paris (FR)
(72) Inventeur: DE GAULLE, Antoine, F-75019 Paris (FR)
(74) Mandataire: Bertrand, Didier
(86) Numéro de dépôt international: FR9800560
(87) Numéro de publication internationale: WO9842488

(56) Documents cités:
- EP-A- 0 340 100
- EP-A- 0 521 343
- WO-A-93/24381
- WO-A-96/11098
- FR-A- 2 697 801
- NL-A- 9 400 402
- PATENT ABSTRACTS OF JAPAN vol. 16, no. 410 (M-1302), 28 août 1992 & JP 04 138296 A (MITSUBISHI ELECTRIC CORP), 12 mai 1992,
- PATENT ABSTRACTS OF JAPAN vol. 95, no. 6, 31 juillet 1995 & JP 07 081284 A (CASIO COMPUT CO LTD), 28 mars 1995,
- PATENT ABSTRACTS OF JAPAN vol. 13, no. 173 (E-748), 24 avril 1989 & JP 01 005023 A (NISSHA PRINTING CO LTD), 10 janvier 1989,
- PATENT ABSTRACTS OF JAPAN vol. 10, no. 2 (M-444), 8 janvier 1986 & JP 60 166516 A (KINUGAWA GOMU KOGYO KK), 29 août 1985,

## Description

La présente invention concerne un procédé permettant d'insérer une étiquette électronique mince à face plane dans la paroi d'un objet réalisé par transformation plastique (moulage par injection ou par compression, rotomoulage ou soufflage) à chaud et sous pression de matières plastiques thermotransformables, notamment ABS (acrylonitrile-butadiène-styrène), polyuréthannes, polyoléfines telles que le polypropylène ou le polyéthylène (et en particulier polyéthylène haute densité [PEHD]). Dans la suite, on appellera moulage toute thermotransformation réalisée en moule, qu'il s'agisse d'un moulage vrai, ou d'un soufflage. L'étiquette insérée permet l'identification à distance et sans contact de l'objet qui la contient, ce qui est particulièrement intéressant lorsque les objets identifiés doivent être authentifiés ou triés. Elle est introduite sans qu'il soit nécessaire de modifier ni le procédé ni le dispositif d'injection. Les objets visés sont très divers et peuvent notamment être des conteneurs (bacs, poubelles, flacons et bouteilles), des palettes, des parties constitutives de véhicules (bouclier, tableau de bord), des oeuvres d'art.

Il est connu, par exemple par les documents WO 93 24381 A, NL 9 400 402 A ou FR 2 697 801 A, d'identifier un objet par une étiquette électronique disposée sur l'objet ou incorporée dans l'objet. Les deux premiers documents enseignent d'incorporer le transpondeur ou l'étiquette électronique dans une paroi relativement épaisse de l'objet lors du moulage. Plus précisément, selon le document WO 93 24381 A, l'étiquette est préalablement enfermée dans un boîtier de protection destiné à la protéger des températures et des pressions de moulage. Ce boîtier est disposé directement sur une paroi du moule par l'intermédiaire d'un passage d'introduction prévu dans le moule, ou est maintenu entre deux parois du moule par des broches permanentes ou provisoires.

Le but de l'invention est d'améliorer le procédé d'inclusion d'étiquette électronique lors du moulage, et notamment de permettre un placement simple, pratiquement à volonté et réalisable même dans des parois moulées de faible épaisseur.

Selon l'invention, la face plane de l'étiquette est d'abord fixée sur un support de matière plastique d'épaisseur sensiblement égale à la profondeur d'inclusion recherchée, le support est fixé à la paroi du moule, la matière plastique de moulage est amenée dans le moule sous pression et sous température prédéterminées, la matière plastique du support d'étiquette étant choisie en fonction de la matière plastique de moulage et desdites pression et température pour que se réalise entre les deux matières plastiques lors du moulage une liaison intime dans la région de contact. Cette liaison est de type soudure autogène, obtenue par fusion et interpénétration des deux matières plastiques dans la région de contact. Le support pendant le moulage sert de matelas amortisseur des pressions transitoires dues à l'injection. Au cours du moulage, il fond, au moins sur sa surface en contact avec la matière de moulage et même plus profondément en fonction de la nature de la matière plastique choisie et notamment de son point de fusion ; en fin de moulage, il fait partie intégrante de la paroi moulée de l'objet.

De préférence, le point de fusion de la matière plastique du support est inférieur (et de préférence suffisamment inférieur) à celui de la matière plastique de moulage, de façon à bien assurer sa fusion par le contact avec la matière de moulage.

La matière plastique de moulage et celle du support sont avantageusement choisies parmi les polyéthylènes haute densité, celle du support ayant une densité plus faible que celle de moulage pour établir la différence entre les points de fusion mentionnée ci-dessus. Par exemple, les températures de fusion des premier et second PEHD peuvent être dans les plages de 150°C-200°C et 200°C-250°C respectivement. Mais, comme mentionné plus haut, conviennent également notamment l'ABS ou les polyuréthannes.

Il peut être avantageux de choisir pour le support et le moulage des matières de couleurs différentes (par exemple respectivement translucide et rouge) de façon à repérer visuellement immédiatement sur la paroi moulée la localisation de l'étiquette, en vue de son utilisation (placement correct du lecteur d'identification). Ceci présente l'avantage de permettre aussi le tri sélectif en cas de destruction de l'objet moulé, avec traitement et/ou recyclage séparé de la partie constitutive en plastique et de la partie contenant l'étiquette.

L'étiquette peut être placée à n'importe quel endroit du moule, mais on choisit de préférence une zone proche de renforts et donc peu susceptible de provoquer des flexions indues dans l'étiquette elle-même.

L'étiquette électronique plane mince utilisée dans l'invention est de type connu en elle-même, encore qu'il revienne à l'invention d'avoir établi que des étiquettes minces pouvaient être incorporées lors du moulage sans protection par boîtier, au contraire de ce qu'enseigne par exemple le document WO 93 24381 A précité. L'étiquette est une étiquette inductive, sans énergie, constituée par un circuit électrique formant antenne, imprimé sur un substrat isolant de qualité convenable, relié à un circuit intégré comprenant une mémoire et les dispositifs de communication avec cette mémoire de l'extérieur et sans contact. Par substrat de qualité convenable, on entend notamment qu'il soit résistant aux températures d'environ 200°C rencontrées lors du moulage, et qu'il présente une certaine rigidité, tout en étant flexible, cette rigidité contribuant à son maintien correct et sans plissement lors du moulage. Les substrats couramment utilisés en époxy d'épaisseur faible, par exemple de un à quelques dixièmes de mm, présentent cette qualité. D'autres matériaux tels que le kapton ou le PET conviennent également. Le contenu de la mémoire peut être lu, voire modifié, sans contact par le passage d'ondes électromagnétiques au travers d'une certaine épaisseur de la matière plastique du substrat et de la paroi de l'objet dans laquelle elle est moulée. Quoique les ondes électromagnétiques d'identification puissent être théoriquement des ondes BF, HF ou UHF, l'invention s'intéresse d'abord aux étiquettes utilisant des fréquences plutôt élevées (environ 10MHz, et notamment la fréquence homologuée 13,56 MHz), avec lesquelles il est possible d'utiliser une antenne de petites dimensions, imprimée sur le substrat (par opposition notamment à certains transpondeurs de l'art antérieur utilisant des antennes à bobinages multiples qui risquent d'être endommagés lors du moulage). Le procédé est cependant applicable à des fréquences plus basses, et notamment inférieures à 150 kHz, munies d'une antenne imprimée. L'impression d'une antenne, notamment par encre conductrice sérigraphiée, est bien connue de l'homme du métier (cf. par exemple le document FR 2 753 305 A).

L'étiquette comporte au moins une face sensiblement plane, généralement celle opposée au circuit intégré, l'autre face comportant souvent une perle de résine de protection de la puce du circuit intégré. L'épaisseur totale de l'étiquette mince est de l'ordre de 0,6 mm à 1 mm au droit de la puce. Par "plane", on entend principalement une surface sensiblement plane géométrique, mais aussi plus généralement une surface développable (par exemple cylindrique), permettant d'y coller une feuille de support, une telle surface pouvant mieux épouser la forme de certains objets moulés.

Le support est avantageusement fixé par collage d'une part à la face plane de l'étiquette et/ou d'autre part à la paroi du moule, collage notamment réalisé à l'aide d'un ruban adhésif double-face. Cependant il est possible de maintenir le support dans le moule avant et pendant le moulage par d'autres moyens, par exemple par aspiration au travers d'orifices de succion prévus dans la paroi du moule quoique cette solution soit plus onéreuse et limite la liberté de placement de l'étiquette dans le moule.

L'adhésif utilisé pour coller l'étiquette au support est un adhésif double-face présentant de part et d'autre de fortes qualités d'adhésion (car il doit coller des matériaux à faible pouvoir d'adhésion, tels que le polyéthylène), et résistant aux températures de moulage.

L'adhésif utilisé pour coller le support au moule est fortement adhérent sur sa face destinée à recevoir le support, mais seulement faiblement adhérent sur l'autre face destinée à coller sur l'acier du moule. Une adhérence de type adhésif repositionnable suffit car l'acier permet un bon collage naturel. Du reste, il est avantageux de présenter les étiquettes munies de leur support et des deux adhésifs sur un support provisoire anti-adhérent, tel qu'un film siliconé, d'où on les détache pour les coller sur le moule. L'adhésif double-face, qui est lors du moulage en contact avec le moule et n'est pas directement exposé à la matière de moulage, doit résister à une température généralement inférieure à 100°C (compte-tenu du refroidissement des moules généralement fort). Son épaisseur est aussi faible que possible, pour ne pas créer sur l'objet moulé, une fois retiré, un évidement trop important.

Avantageusement, le support de l'étiquette est découpé dans une feuille mince de matière plastique, de nature chimique et de caractéristiques physiques choisies pour obtenir la soudure par fusion mentionnée plus haut. Son épaisseur est de préférence inférieure à 1 mm, et avantageusement de l'ordre de 500µm : une épaisseur trop importante oppose plus d'inertie thermique au réchauffement et à la fusion localisée du support au contact de la matière de moulage ; d'autre part, trop d'épaisseur peut conduire à des phénomènes de reflux et d'irrégularités de moulage, lors du passage de la matière de moulage fondue au-dessus de l'étiquette collée au moule.

Selon une variante avantageuse, le support est préparé dans une feuille directement revêtue sur chacune de ses deux faces de la colle nécessaire pour coller d'une part l'étiquette et d'autre part le moule (ou le support provisoire), rendant inutile l'emploi des adhésifs double-face mentionnés ci-dessus.

De préférence, le support dépasse de l'étiquette de manière à créer une surface de contact suffisamment grande entre lui et la matière de moulage pour réaliser une intégration solide de l'étiquette de l'objet moulé. Cette surface de contact est prévue à l'extérieur de l'étiquette, et/ou, par découpage d'une partie centrale de l'étiquette non occupée par le circuit imprimé, à l'intérieur même de l'étiquette.

Avantageusement, quand les dimensions de l'étiquette rendent opportun de réaliser une découpe centrale, le support comporte aussi un trou central, de manière que la matière de moulage puisse s'écouler jusqu'à la paroi du moule, au centre de l'étiquette et du support, et faciliter le dégazage de la matière plastique.

La partie de surface du support qui dépasse de l'étiquette, extérieurement et/ou intérieurement, peut être munie de canaux facilitant l'évacuation des gaz et contribuant à l'absence de bulles.

Bien que ce ne soit pas nécessaire selon l'invention, l'étiquette peut recevoir sur sa face autre que la face plane d'autres éléments de couverture tels qu'une feuille de matière plastique ; elle peut aussi être préalablement noyée dans un bloc de matière plastique avant d'être placée sur le support, ou bien ledit bloc peut directement constituer, du côté de la face plane de l'étiquette, ledit support si la matière constituant le bloc est choisie convenablement.

De plus, l'invention concerne aussi, en tant que moyen intermédiaire destiné au procédé ci-dessus, un dispositif préparatoire pour l'inclusion d'une étiquette électronique mince à face plane, à une profondeur prédéterminée dans une paroi d'un objet moulé en matière plastique sous une pression et une température prédéterminées, ce dispositif comprenant d'une part ladite étiquette et d'autre part un support de matière plastique d'épaisseur sensiblement égale à la profondeur d'inclusion recherchée, support sur lequel est fixée ladite face plane de l'étiquette, la matière plastique du support d'étiquette étant choisie en fonction de la matière plastique de moulage et desdites pression et température pour qu'une liaison intime se réalise par fusion dans la région de contact entre les deux matières plastiques lors du moulage. Le support est avantageusement fixé par collage à la face plane de l'étiquette. De préférence, le support est collé par l'intermédiaire d'un adhésif relativement faible à un support provisoire anti-adhérent, par exemple en bande qui peut regrouper plusieurs étiquettes, chaque étiquette comprenant un substrat sur lequel se trouvent un circuit intégré et une antenne imprimée.

Enfin l'invention concerne naturellement l'objet moulé en matière plastique lui-même, comportant une étiquette électronique qui a été incluse dans une paroi de l'objet par le procédé conforme à l'invention.

L'invention sera mieux comprise grâce à la description suivante, se référant aux dessins annexés sur lesquels :
- la figure 1 est une vue schématique de dessus d'une étiquette présentée sur support provisoire,
- la figure 2 est une section II-II de la figure 1,
- la figure 3 est une vue en coupe de l'étiquette en place dans le moule.

Les figures sont destinées à comprendre l'agencement des différents éléments de l'invention entre eux, mais l'échelle relative de ces éléments n'a pas été respectée, pour permettre une meilleure lisibilité et comme le montreront à l'évidence les exemples de dimensions donnés dans la description suivante.

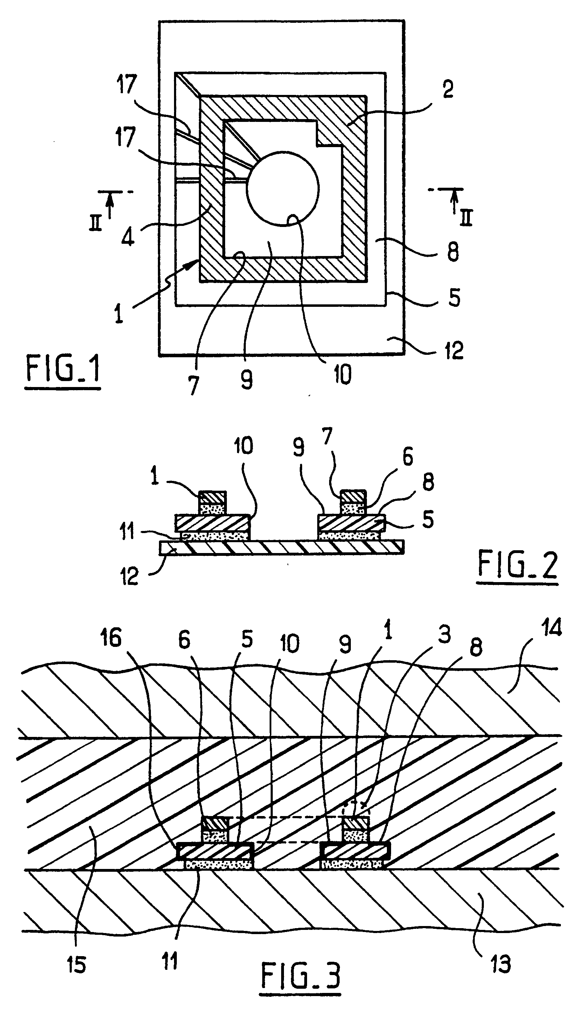

L'étiquette mince 1 représentée sur les figures 1 à 3 se présente sous la forme d'un substrat ou film mince, par exemple en époxy d'épaisseur 0,13 mm, de forme générale carrée (par exemple de 28 mm x 28 mm), sur lequel se trouvent d'une part le circuit intégré (puce), protégé par une perle de résine 3 (épaisseur au droit de la puce 0,70 mm), et d'autre part une antenne sérigraphiée 4 (épaisseur au droit de la sérigraphie 0,18 mm), disposée en carré de manière à avoir une large surface d'interception. L'étiquette 1 est collée à son support 5 conforme à l'invention par l'intermédiaire d'un adhésif double-face 6, d'épaisseur 0,127 mm et d'adhésion très élevée, par exemple l'adhésif vendu par la société 3M sous la référence Y9492 (résistance au pelage à 180° sur acier de 16,3 N/cm après 72h).

L'étiquette 1 et son adhésif 6 sont découpés intérieurement pour dégager une ouverture intérieure 7 (aucun élément actif de l'étiquette ne se trouvant dans la zone centrale de l'étiquette 1).

Le support 5, par exemple de 35 mm x 35 mm, dépasse ainsi de l'ensemble 6,7 aussi bien extérieurement (surface extérieure 8) qu'intérieurement (surface intérieure 9). Le support 5 est par exemple réalisé dans un film de polyéthylène de poids moléculaire relativement élevé, et d'épaisseur comprise entre 0,55 mm et 0,65 mm.

Le support 5 est placé grâce à un adhésif double-face 11 sur un film siliconé 12 (support provisoire) d'épaisseur 0,10 mm. Plusieurs étiquettes peuvent être placées à la suite sur une bande de film siliconé, éventuellement bobinée.

L'adhésif double-face est par exemple celui, d'épaisseur 0,062 mm, fourni par la société 3M sous la référence 9871. Un trou 10 (diamètre par exemple de 12 mm) est prévu au centre du support 5 et de l'adhésif 11. Comme représenté sur les figures 2 et 3, la périphérie de l'adhésif 11 peut être très légèrement en retrait par rapport à la périphérie du support 5, voire d'aplomb, mais de préférence pas en débordement afin de ne pas créer lors du moulage des liaisons avec la matière moulée qui risquent de gêner l'enlèvement ultérieur de l'adhésif 11 après le démoulage.

Pour l'opération de moulage, l'étiquette 1 est retirée, avec son support 5 et l'adhésif 11, du film siliconé 12 et, lors de l'ouverture du moule, est collée par l'adhésif 11 à l'emplacement désiré sur la paroi d'acier 13 du moule 13,14. La matière plastique de moulage 15 peut alors remplir l'intervalle entre les deux parois 13, 14 et vient au contact de l'étiquette 1 et des parties du support 5 non recouvertes par l'étiquette 1. Sur ces parties, c'est-à-dire essentiellement les surfaces dégagées 8 et 9 et aussi sur le pourtour intérieur du trou 10, lorsqu'il existe, ou le pourtour extérieur 16 du support 5, la matière plastique du support 5 fond au moins superficiellement au contact de la matière de moulage 15 de sorte qu'il se forme une zone de soudure entre les deux matières, représentée en trait épais sur la figure 3. Le trou 10 permet à la matière moulée d'atteindre la paroi du moule dans la partie centrale de l'étiquette et facilite donc le dégazage du polyéthylène par les parois. Pour faciliter le cheminement des gaz, on peut aussi prévoir sur les surfaces 8 et 9 du support 5 des tranchées ou canaux 17 de profondeur inférieure ou égale à l'épaisseur du support 5, tracés en étoile divergente et débouchant soit dans le trou intérieur 10 soit sur le pourtour extérieur 16 du support 5. On a représenté sur la figure 1 seulement quelques uns de ces canaux 17.

La relativement faible adhérence de l'adhésif 11 sur la paroi d'acier 13 ne s'oppose pas au démoulage, et l'adhésif 11 peut par la suite être retiré de la surface de l'objet moulé.

Les essais suivants ont été réalisés avec succès.

Des étiquettes électroniques fabriquées par GEMPLUS sous la référence SMA210 et LMA210 ont été collées sur un support en polyéthylène translucide de la manière décrite ci-dessus, et le support de l'étiquette, portant l'étiquette, a été fixé sur la paroi du moule à l'endroit choisi et a été maintenu dans cette position pendant l'injection malgré les efforts exercés par le polyéthylène haute densité injecté (température de la matière injectée au moment où elle pénètre dans le moule : environ 270°C ; pression d'injection comprise entre 1000 et 1500 bars).

Toutes ces étiquettes mises ainsi en place ont fonctionné ensuite normalement.

## Revendications

1. Procédé d'inclusion d'une étiquette électronique mince (1) à face plane, à une profondeur prédéterminée dans une paroi d'un objet moulé en matière plastique (15) sous une pression et une température prédéterminées, comportant les étapes suivantes : ladite face plane de l'étiquette (1) est d'abord fixée sur un support (5) de matière plastique d'épaisseur sensiblement égale à la profondeur d'inclusion recherchée, le support (5) est fixé à la paroi (13) du moule, puis la matière plastique de moulage (15) est amenée dans le moule (13, 14) sous lesdites pression et température, la matière plastique du support (5) d'étiquette étant choisie en fonction de la matière plastique de moulage (15) et desdites pression et température pour qu'une liaison intime se réalise par fusion dans la région de contact (8, 9, 10, 16) entre les deux matières plastiques lors du moulage.

2. Procédé selon la revendication 1, **caractérisé en ce que** le support (5) est fixé par collage à la face plane de l'étiquette (1) et/ou à la paroi (13) du moule.

3. Procédé selon la revendication 2, **caractérisé en ce que** ledit collage est réalisé à l'aide d'un adhésif double-face (6, 11).

4. Procédé selon la revendication 3, **caractérisé en ce que** préalablement au moulage, on a préparé et disposé une étiquette (1) munie de son support (5) et de ses adhésifs double-face (6, 11) sur un support provisoire anti-adhérent (12).

5. Procédé selon l'une quelconque des revendications précédentes, **caractérisé en ce que** le point de fusion de la matière plastique du support (5) est inférieur à celui de la matière plastique de moulage (15).

6. Procédé selon l'une quelconque des revendications précédentes, **caractérisé en ce que** la matière plastique de moulage (15) et celle du support (5) sont choisies parmi les polyéthylène haute densité.

7. Procédé selon l'une quelconque des revendications précédentes, **caractérisé en ce que** le support (5) de l'étiquette est découpé dans une feuille mince de matière plastique.

8. Procédé selon la revendication 7, **caractérisé en ce que** le support (5) est préparé dans une feuille directement revêtue sur chacune de ses deux faces de la colle nécessaire pour adhérer d'une part à l'étiquette et d'autre part à la paroi du moule.

9. Procédé selon l'une quelconque des revendications précédentes, **caractérisé en ce qu'**une partie de la surface du support (5), non recouverte par l'étiquette (1), en dépasse extérieurement (8) et/ou intérieurement (9).

10. Procédé selon la revendication 9, **caractérisé en ce que** ladite partie (8, 9) de surface du support est munie de canaux (17).

11. Dispositif préparatoire pour l'inclusion d'une étiquette électronique mince (1) à face plane, à une profondeur prédéterminée dans une paroi d'un objet moulé en matière plastique (15) sous une pression et une température prédéterminées, ce dispositif comprenant d'une part ladite étiquette et d'autre part un support (5) de matière plastique d'épaisseur sensiblement égale à la profondeur d'inclusion recherchée, support sur lequel est fixée ladite face plane de l'étiquette (1), la matière plastique du support (5) d'étiquette étant choisie en fonction de la matière plastique de moulage (15) et desdites pression et température pour qu'une liaison intime se réalise par fusion dans la région de contact (8, 9, 10, 16) entre les deux matières plastiques lors du moulage.

12. Dispositif selon la revendication 11, **caractérisé en ce que** le support (5) est fixé par collage à la face plane de l'étiquette (1).

13. Dispositif selon l'une quelconque des revendications 11 ou 12, **caractérisé en ce que** le support (5) est collé par l'intermédiaire d'un adhésif relativement faible à un support provisoire anti-adhérent (12).

14. Dispositif selon l'une quelconque des revendications 11 à 13, **caractérisé en ce qu'**une partie de la surface du support (5), non recouverte par l'étiquette (1), en dépasse extérieurement (8) et/ou intérieurement (9).

15. Dispositif selon l'une quelconque des revendications 11 à 14, **caractérisé en ce que** l'étiquette (1) comprend un substrat sur lequel se trouvent un circuit intégré et une antenne imprimée.

## Patentansprüche

1. Verfahren zum Einschluß eines dünnen ebenen elektronischen Etiketts (1) in einer bestimmten Tiefe in eine Wand eines wärmeverformten Gegenstands aus Kunststoff (15) bei einem vorgegebenen Druck und einer vorgegebenen Temperatur, aufweisend die folgenden Schritte:
die ebene Fläche des Etiketts (1) wird zuerst an einem Träger (5) aus Kunststoff befestigt, dessen Dicke im wesentlichen gleich der gewünschten Einschlußtiefe ist, der Träger (5) wird an der Wand (13) der Form befestigt, dann wird der Warmverformungskunststoff (15) bei dem Druck und der Temperatur in die Form (13,14) geleitet, wobei der Kunststoff des Trägers (5) des Etiketts abhängig von dem Kunststoff der Warmverformung (15) und von dem Druck und der Temperatur gewählt wird, so daß beim Warmverformen eine enge Bindung durch Verschmelzen in dem Kontaktbereich (8,9,10,16) zwischen den zwei Kunststoffen erreicht wird.

2. Verfahren nach Anspruch 1, **dadurch gekennzeichnet, daß** der Träger (5) durch Verklebung an der ebenen Fläche des Etiketts (1) und/oder an der Wand (13) der Form befestigt wird.

3. Verfahren nach Anspruch 2, **dadurch gekennzeichnet, daß** die Verklebung mittels eines doppelflächigen Klebstoffs (6,11) erreicht wird.

4. Verfahren nach Anspruch 3, **dadurch gekennzeichnet, daß** man vor dem Warmverformen ein Etikett (1), das mit seinem Träger (5) und seinen doppelflächigen Klebstoffen (6,11) versehen ist, auf einem vorläufigen Antiadhäsionsträger (12) vorbereitet und anordnet.

5. Verfahren nach einem der vorstehenden Ansprüche, **dadurch gekennzeichnet, daß** der Schmelzpunkt des Kunststoffs des Trägers (5) unter dem des Kunststoffs der Warmverformung (15) liegt.

6. Verfahren nach einem der vorstehenden Ansprüche, **dadurch gekennzeichnet, daß** der Kunststoff der Warmverformung (15) und derjenige des Trägers (5) unter den Polyethylenen hoher Dichte ausgewählt werden.

7. Verfahren nach einem der vorstehenden Ansprüche, **dadurch gekennzeichnet, daß** der Träger (5) des Etiketts in einem dünnen Kunststoffblättchen zugeschnitten wird.

8. Verfahren nach Anspruch 7, **dadurch gekennzeichnet, daß** der Träger (5) in einem Blättchen vorbereitet wird, das auf jeder seiner zwei Flächen direkt mit dem erforderlichen Klebstoff überzogen ist, um einerseits an dem Etikett und andererseits an der Wand der Form zu haften.

9. Verfahren nach einem der vorstehenden Ansprüche, **dadurch gekennzeichnet, daß** ein nicht mit dem Etikett (1) bedeckter Teil der Oberfläche des Trägers (5) außen (8) und/oder innen (9) vorsteht.

10. Verfahren nach Anspruch 9, **dadurch gekennzeichnet, daß** der Teil (8,9) der Oberfläche des Trägers mit Kanälen (17) versehen ist.

11. Vorbereitungsgerät zum Einschluß eines dünnen ebenen elektronischen Etiketts (1) in einer vorgegebenen Tiefe in eine Wand eines warmverformten Gegenstands aus Kunststoff bei einem vorgegebenen Druck und einer vorgegebenen Temperatur, wobei dieses Gerät einerseits das Etikett und andererseits einen Träger (5) aus Kunststoff umfaßt, dessen Dicke im wesentlichen gleich der gewünschten Einschlußtiefe ist, Träger, auf welchem die ebene Fläche des Etiketts (1) befestigt ist, wobei der Kunststoff des Etikettenträgers (5) abhängig von dem Kunststoff der Warmverformung (15) und von dem Druck und der Temperatur gewählt wird, so daß bei der Warmverformung eine enge Bindung durch Verschmelzung in dem Kontaktbereich (8,9,10,16) zwischen den zwei Kunststoffen erreicht wird.

12. Gerät nach Anspruch 11, **dadurch gekennzeichnet, daß** der Träger (5) durch Verklebung an der ebenen Fläche des Etiketts (1) befestigt wird.

13. Gerät nach einem der Ansprüche 11 oder 12, **dadurch gekennzeichnet, daß** der Träger (5) mittels eines relativ schwachen Klebstoffs an einen vorläufigen Antiadhäsionsträger (12) geklebt wird.

14. Gerät nach einem der Ansprüche 11 bis 13, **dadurch gekennzeichnet, daß** ein nicht mit dem Etikett (1) bedeckter Teil der Oberfläche des Trägers (5) außen (8) und/oder innen (9) vorsteht.

15. Gerät nach einem der Ansprüche 11 bis 14, **dadurch gekennzeichnet, daß** das Etikett (1) ein Substrat umfaßt, auf welchem sich eine integrierte Schaltung und eine gedruckte Antenne befinden.

## Claims

1. A process for including a thin electronic label (1) with a flat face, at a predetermined depth in a wall of a molded object made of plastic material (15) at predetermined temperature and pressure, comprising the following steps : said flat face of the label (1) is first attached to a support (5) of a plastic material having a thickness essentially equal to the desired inclusion depth; the support (5) is fixed to the wall (13) of the mold, then the plastic molding material (15) is brought into the mold (13, 14) at said pressure and temperature, the plastic material of the label support (5) being chosen as a function of the plastic molding material (15) and said pressure and temperature so that an intimate bond is established by melting in the contact region (8, 9, 10, 16) between the two plastic materials at the time of molding.

2. Process according to Claim 1, **characterized in that** the support (5) is fixed by adhering to the flat face of the label (1) and/or to the wall (13) of the mold.

3. Process according to Claim 2, **characterized in that** said adhering is done with a double-sided adhesive (6, 11).

4. Process according to Claim 3, **characterized in that**, prior to molding, a label (1) with its support (5) and double-sided adhesives (6, 11) is prepared and put in place on a temporary antiadhesive support (12).

5. Process according to any of the preceding claims, **characterized in that** the melting point of the plastic support material (5) is lower than that of the plastic molding material (15).

6. Process according to any of the preceding claims, **characterized in that** the plastic molding material (15) and the support material (5) are chosen from the high-density polyethylenes.

7. Process according to any of the preceding claims, **characterized in that** the support (5) of the label is cut out from a thin sheet of plastic material.

8. Process according to Claim 7, **characterized in that** the support (5) is. prepared in a sheet directly coated on both faces with the adhesive needed to make it adhere on one side to the label and on the other to the wall of the mold.

9. Process according to any of the preceding claims, **characterized in that** part of the support surface (5) not covered by the label (1) extends beyond it on the outside (8) and/or on the inside (9).

10. Process according to Claim 9, **characterized in that** said part (8, 9) of the support surface has channels (17).

11. Preparatory device for inclusion of a thin electronic label (1) with a flat face, at a predetermined depth in the wall of a plastic molded item (15) at a predetermined temperature and pressure, said device including said label, on the one hand, and a support (5), on the other hand, made of a plastic material whose thickness is essentially equal to the desired inclusion depth; on this support there is affixed said flat face of the label (1), the plastic material of the label support (5) being chosen as a function of the plastic molding material (15) and said pressure and temperature being chosen so that an intimate bond is established by melting in the contact region (8, 9, 10, 16) between the two plastic materials at the time of molding.

12. Device according to Claim 11, **characterized in that** the support (5) is attached by adhering to the flat face of the label (1).

13. Device according to either Claim 11 or 12, **characterized in that** the support (5) is attached by means of a relatively weak adhesive to a temporary antiadhesive support (12).

14. Device according to any of Claims 11 - 13, **characterized in that** part of the support surface (5) not covered by the label (1) extends beyond it on the outside (8) and/or on the inside (9).

15. Device according to any of Claims 11-14, **characterized in that** the label (1) includes a substratum in which there is an integrated circuit and a printed antenna.
